# DEMANDE DE BREVET EUROPEEN

(11) **EP 4 789 959 A1**
(43) Date de publication de la demande: **12.08.2026**
(21) Numéro de dépôt: 26156721.8
(22) Date de dépôt: 05.02.2026
(51) Int. Cl.: B62K 19/30, B62L 1/00, B62J 45/40, B62J 45/423, B62J 45/413

(54) **SYSTÈME DE DÉTERMINATION D'UNE INFORMATION DE ROTATION D'UNE ROUE DE VÉLO**

(30) Priorité: 10.02.2025 FR 2501352
(71) Demandeur: Decathlon, 59650 Villeneuve d'Ascq (FR)
(72) Inventeur: GROSPERRIN, Tom, 59650 Villeneuve d'Ascq (FR); BESSE, Xavier, 59650 Villeneuve d'Ascq (FR)
(74) Mandataire: Sayettat, Julien Christian

(57) **Abrégé**

L'invention concerne un système de détermination d'une information de rotation d'une roue de vélo équipée d'un dispositif de freinage comprenant un disque (13) fixé à un moyeu (14) et un étrier de frein fixé à un élément de cadre (9), ledit système comprenant : un module codeur (21) comprenant le moyeu (14), le disque (13) et un roue codeuse (22) délivrant un signal représentatif de sa rotation ; un capteur apte à détecter le signal délivré par la roue codeuse (22) pour fournir l'information de rotation ; un module capteur (26) comprenant un boîtier (27) dans lequel le capteur est logé, l'élément de cadre (9) sur lequel le boîtier (27) est fixé et une entretoise interposée entre ledit boîtier et ledit élément de cadre pour positionner ledit capteur à une distance de lecture du signal déterminée pour limiter l'influence du disque de frein (13).

## Description

L'invention concerne un système de détermination d'une information de rotation d'une roue de vélo, ainsi qu'un vélo comprenant un tel système.

Elle s'applique en particulier à un système pour la détermination d'une information de rotation d'une roue équipée d'un dispositif de freinage comprenant un disque de frein fixé à un moyeu de ladite roue, ainsi qu'un étrier de frein fixé à un élément du cadre du vélo.

Selon une application particulière, le système a pour but de mesurer une information de rotation d'une roue arrière d'un vélo à assistance électrique, notamment sa vitesse et/ou son sens de rotation, afin de pouvoir asservir l'assistance motorisée fournie.

On connaît des systèmes qui prévoient de placer au moins un aimant sur les rayons de la roue, ainsi qu'un capteur fixé sur le cadre à distance de lecture du champ magnétique délivré par la rotation dudit aimant. Cette solution, quoique simple et peu couteuse à installer, s'avère en revanche insuffisamment précise pour un pilotage fin d'un système d'assistance électrique.

Le document EP-3 176 064 décrit un système comprenant une roue phonique qui est associée au moyeu conjointement et de façon adjacente au disque de frein, et un capteur monté au niveau de l'étrier de frein pour être à distance de lecture du signal délivré par ladite roue phonique.

En particulier, l'utilisation d'une roue phonique comprenant une piste annulaire présentant une succession angulaire d'ouvertures et de ponts permet de délivrer un signal pseudo-sinusoïdal de rotation, ce qui améliore la précision de l'information de rotation fournie par le capteur.

Toutefois, l'implantation de la roue phonique contre le disque de frein génère une obstruction de certaines des ouvertures de ladite roue codeuse par les branches dudit disque de frein, ce qui perturbe le signal délivré par la roue phonique et donc l'information de rotation fournie par le capteur, notamment en fonction de la distance de lecture à laquelle ledit capteur est monté.

L'invention vise à perfectionner l'art antérieur en proposant notamment un système de détermination d'une information de rotation d'une roue de vélo, dans lequel la distance de lecture entre le capteur et la roue codeuse portée par le disque de frein peut être modulée de façon simple, notamment en fonction de la géométrie du vélo, de sorte à fiabiliser l'information fournie par le capteur malgré la présence du disque de frein.

A cet effet, selon un premier aspect, l'invention propose un système de détermination d'une information de rotation d'une roue de vélo équipée d'un dispositif de freinage comprenant un disque de frein fixé à un moyeu de ladite roue et un étrier de frein fixé à un élément de cadre, ledit système comprenant :
- un module codeur comprenant le moyeu, le disque de frein et un roue codeuse qui est associée audit moyeu et/ou audit disque de frein, ladite roue codeuse délivrant un signal représentatif de sa rotation ;
- un capteur apte à détecter le signal délivré par la roue codeuse pour fournir l'information de rotation ;
ledit système comprenant un module capteur comprenant un boîtier dans lequel le capteur est logé, l'élément de cadre sur lequel le boîtier est fixé et une entretoise qui est interposée entre ledit boîtier et ledit élément de cadre, ladite entretoise étant agencée pour positionner ledit capteur à une distance de lecture du signal délivré par la roue codeuse qui est déterminée pour limiter l'influence sur ledit signal de la présence du disque de frein dans le module codeur.

Selon un second aspect, l'invention propose un vélo comprenant un cadre et une roue équipée d'un dispositif de freinage comprenant un disque de frein fixé à un moyeu de ladite roue et un étrier de frein fixé à un élément de cadre dudit vélo, ledit vélo étant équipé d'un tel système de détermination d'une information de rotation de ladite roue.

D'autres particularités et avantages de l'invention apparaîtront dans la description qui suit, faite en référence aux figures jointes, dans lesquelles :
[Fig.1] représente partiellement et en perspective partiellement éclatée, le montage sur un cadre de vélo d'un système de détermination selon un mode de réalisation de l'invention ;
[Fig.1a] représente en perspective éclatée le système de détermination de la figure 1 ;
[Fig.1b] représente en perspective éclatée le module capteur du système de détermination de la figure 1a ;
[Fig.1c] représente en coupe sensiblement horizontale le système de détermination de la figure 1a,
[Fig.1d] étant un agrandissement de la zone D de la figure 1c ;
[Fig.2a] et
[Fig.2b] représentent un système de détermination selon un autre mode de réalisation de l'invention, respectivement en perspective éclatée (figure 2a) et en vue latérale assemblée (figure 2b) ;
[Fig.3a] représente en perspective éclatée le module capteur du système de détermination des figures 2a et 2b ;
[Fig.3b] représente en vue latérale l'élément de cadre du module capteur de la figure 3a ;
[Fig.4] et
[Fig.5] représentent chacune en vue de face respectivement la roue codeuse (figure 4) et une rondelle de montage de ladite roue sur le disque de frein (figure 5) pour les systèmes de détermination des figures précédentes.

En relation avec ces figures, on décrit ci-dessous un vélo, notamment à assistance électrique.

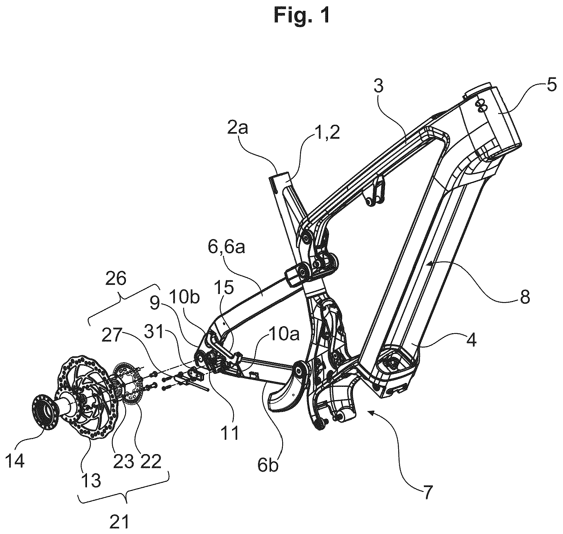

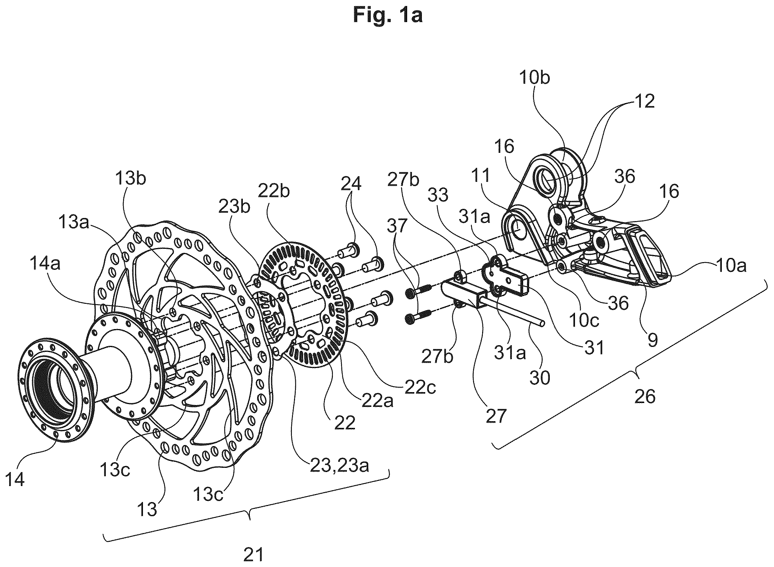

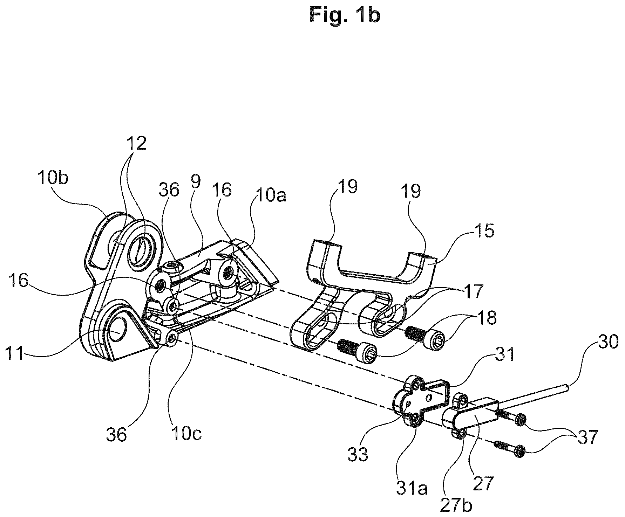

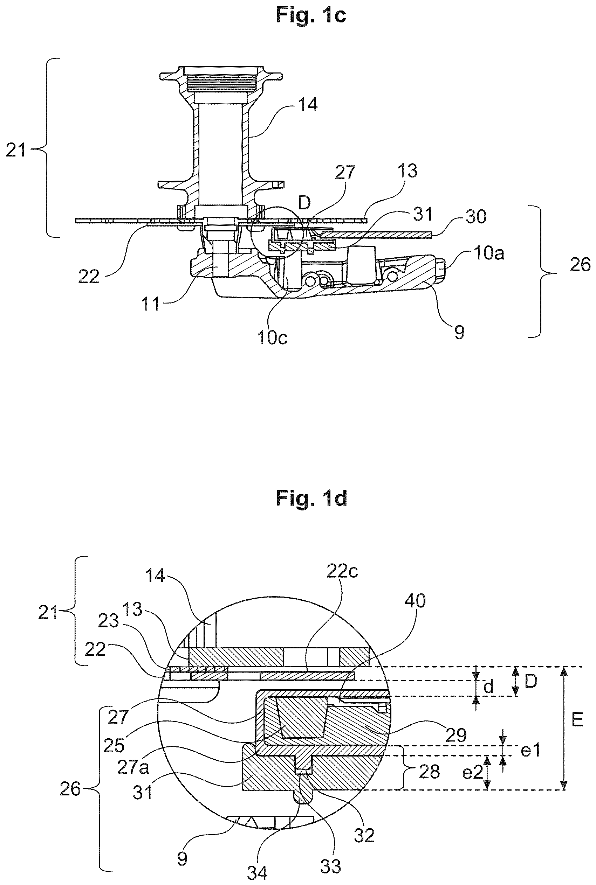

En relation avec la figure 1, le vélo comprend un cadre 1 qui présente un tube de selle 2 central, dans l'extrémité supérieure 2a duquel une selle d'assise pour l'utilisateur est destinée à être montée, de préférence de manière coulissante dans ledit tube, de manière à permettre audit utilisateur de régler la hauteur de ladite selle.

Le cadre 1 comprend une structure antérieure formée d'un tube supérieur horizontal 3 et d'un tube inférieur oblique 4 dont les extrémités antérieures respectives sont associées à un tube de direction 5, dans lequel un guidon de vélo associé à une fourche de roue directrice est destiné à être monté en rotation.

Le cadre 1 comprend en outre une structure postérieure formée de deux haubans 6 qui présentent chacun une structure triangulaire qui s'étend longitudinalement de part et d'autre du tube de selle 2, une roue motrice étant montée en rotation entre les extrémités postérieures libres desdits haubans.

Dans la description, les termes de positionnement dans l'espace sont pris en référence au vélo et à ses composants tels que représenté sur les figures. En particulier :
- les termes « antérieur » et « postérieur » sont définis par rapport à la direction de déplacement du vélo ;
- le terme « longitudinal » fait référence à une direction sensiblement horizontale parallèle à la dimension maximale du cadre du vélo, mesurée notamment suivant sa direction de déplacement, le terme « transversal » faisant référence à une direction sensiblement horizontale perpendiculaire à cette direction longitudinale.

De façon connue, le cadre 1 comprend en outre un pédalier qui est monté en rotation dans un logement 7 formé à la jonction entre les extrémités inférieures respectives des tubes oblique 4 et de selle 3, ledit pédalier étant connecté à la roue motrice montée sur les haubans postérieurs 6 au moyen d'une chaîne ou d'une courroie de transmission, afin de permettre l'entraînement en rotation de ladite roue motrice par actionnement dudit pédalier, éventuellement en étant assisté par au moins un moteur électrique également disposé dans ledit logement.

En particulier, le vélo comprend un logement 8 formé dans le tube oblique 4 pour permettre le montage réversible d'une source d'alimentation en énergie électrique pour le moteur d'assistance électrique au pédalage, par exemple un module de batterie rechargeable.

Sur la figure 1, chaque hauban postérieur 6 est formé de deux tubes respectivement supérieur 6a et inférieur 6b dont les extrémités antérieures respectives sont fixées sur le tube de selle 2, et dont les extrémités postérieures sont jointes par un élément de cadre 9.

Dans les modes de réalisation représentés, l'élément de cadre 9, 9' présente une géométrie sensiblement en V, avec :
- deux sections d'extrémité, respectivement antérieure 10a, 10a' et postérieure 10b, 10b', agencées pour l'intégration dudit élément au cadre 2, par association de la section antérieure 10a, 10a' - respectivement postérieure 10b, 10b' - au tube inférieur 6b - respectivement supérieur 6a - d'un hauban 6 ; et
- une section centrale 10c, 10c', formée à l'intersection entre lesdites sections d'extrémité, et pourvue d'un logement 11, 11' pour la fixation d'un axe de rotation de la roue motrice.

Par ailleurs, au moins une section d'extrémité 10a, 10a', 10b' présente des moyens de fixation, notamment par soudage, sur le tube 6a, 6b correspondant d'un hauban postérieur 6.

Sur les figures 1, 1a, 1b et 1c, la section d'extrémité antérieure 10a présente des moyens de fixation par soudage à un tube inférieur 6b d'un hauban 6, et la section d'extrémité postérieure 10b présente des orifices 12 d'association en rotation au tube supérieur 6a dudit hauban. Cet agencement est notamment adapté pour permettre un montage en suspension de la roue motrice sur le cadre 1 du vélo, par exemple pour un vélo destiné à être utilisé sur un terrain accidenté.

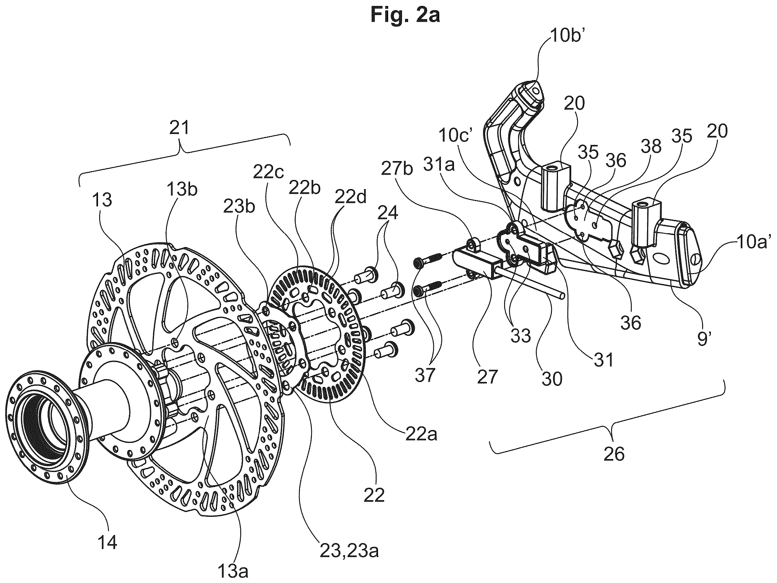

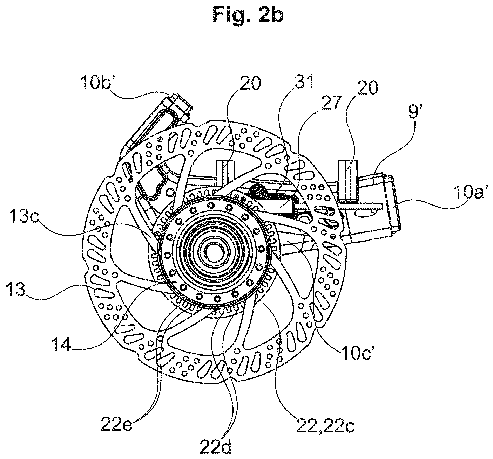

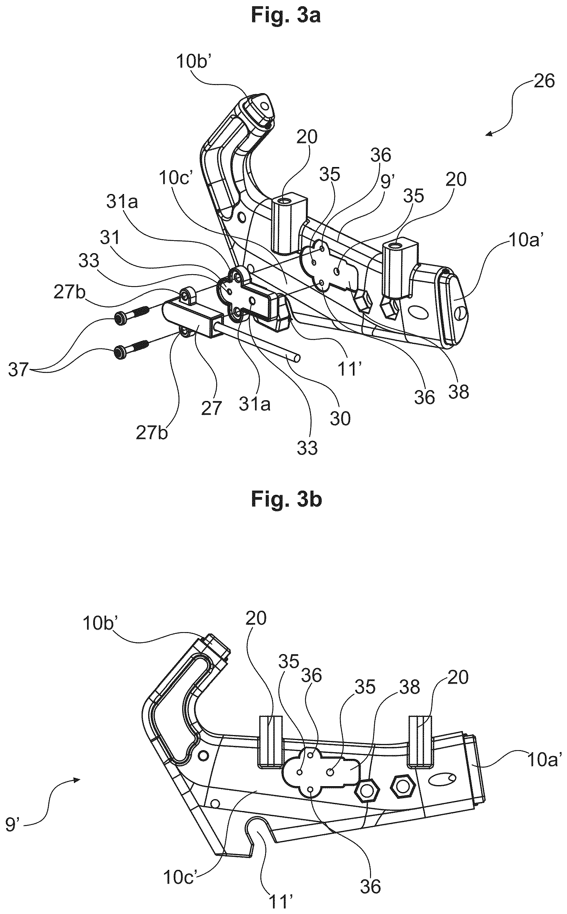

Les figures 2a, 2b, 3a et 3b présentent un autre mode de réalisation, dans lequel les deux sections d'extrémité 10a', 10b' présentent chacune des moyens de fixation par soudage au tube 6a, 6b correspondant d'un hauban 6.

La roue motrice est équipée d'un dispositif de freinage comprenant un disque de frein 13 fixé à un moyeu 14 de ladite roue, ainsi qu'un étrier de frein qui est fixé à l'élément de cadre 9, 9' portant ladite roue motrice.

Par ailleurs, le vélo est équipé d'un système de détermination d'une information de rotation de la roue motrice, par exemple sa vitesse et/ou son sens de rotation, notamment afin de pouvoir piloter le moteur d'assistance électrique au pédalage en fonction de ladite information.

Sur les figures 1, 1a, 1b et 1c, le système de détermination comprend en outre un support 15 pour fixer l'étrier de frein sur l'élément de cadre 9.

Le support 15 et l'élément de cadre 9 présentent des moyens de fixation réciproques, par exemple sous forme d'alésages 16, 17 formés sur respectivement ledit élément de cadre et ledit support, les alésages 16 dudit élément de cadre étant taraudés pour permettre la fixation sur ledit élément du support 15 au moyen de vis 18.

Par ailleurs, le support 15 présente des moyens distincts pour permettre la fixation sur lui de l'étrier de frein. Sur les figures susmentionnées, ces moyens se présentent sous la forme de manchons 19 dans lesquels des structures complémentaires solidaires de l'étrier de frein sont destinées à être fixées.

Sur les figures 2a, 2b, 3a et 3b, l'élément de fixation 9' comprend des moyens pour la fixation sur lui de l'étrier, notamment sous forme de manchons 20 venus de matière avec ledit élément, lesdits manchons étant par exemple agencés pour recevoir chacun une structure complémentaire portée par l'étrier de frein.

Le système de détermination comprend un module codeur 21 qui comprend le moyeu 14 et le disque de frein 13, ainsi qu'une roue codeuse 22 qui est associée audit moyeu et/ou audit disque de frein, en étant agencée pour délivrer un signal représentatif de sa rotation, et donc indirectement de la rotation de la roue motrice du vélo.

Dans les modes de réalisation représentés, la roue codeuse 22 et le disque de frein 13 sont fixés conjointement sur le moyeu 14 de la roue motrice.

En particulier, le module codeur 21 comprend une rondelle 23 qui est interposée entre le disque 13 et la roue codeuse 22, ladite roue codeuse, ladite rondelle et ledit disque étant fixés conjointement sur ledit moyeu.

Pour ce faire, la roue codeuse 22, la rondelle 23 et le disque 13 comprennent chacun une couronne centrale 22a, 23a, 13a qui présente des moyens de fixation au moyeu 14, par exemple sous la forme d'orifices 22b, 23b, 13b équirépartis angulairement sur ladite couronne, les orifices 22b, 23b, 13b respectifs desdites couronnes étant agencés pour être alignés avec des orifices taraudés 14a formés à cet effet sur ledit moyeu, afin de permettre leur fixation conjointe au moyen de vis 24.

La roue codeuse 22 est une roue dite « phonique » qui comprend une piste annulaire 22c présentant une succession angulaire d'ouvertures 22d et de ponts 22e délivrant un signal pseudo-sinusoïdal de rotation.

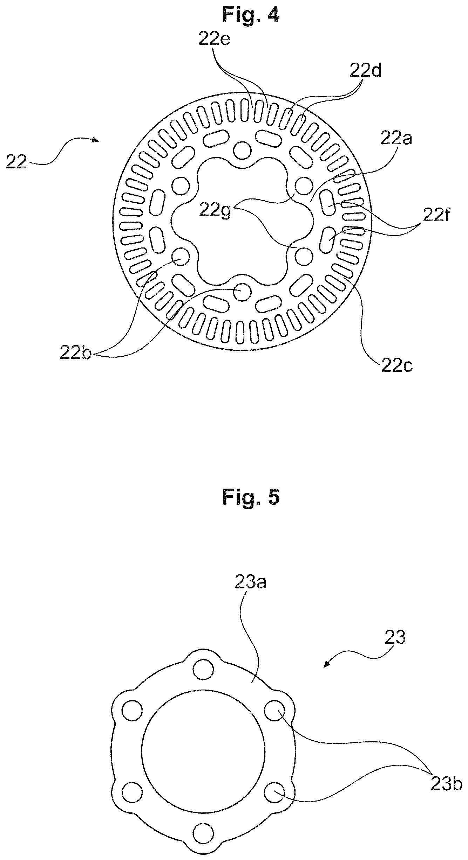

Comme représenté notamment sur la figure 4, la roue codeuse 22, par exemple formée par découpe et emboutissage d'une tôle en matériau métallique, présente :
- une couronne centrale 22a de fixation sur le moyeu 14, formée de lobes 22g équirépartis angulairement et pourvus chacun d'un orifice circulaire 22b pour ladite fixation, lesdits orifices présentant un diamètre de l'ordre de 5,4 mm et étant espacés angulairement d'un angle de l'ordre de 60°, mesuré entre les centres de symétrie respectifs desdits orifices ;
- une couronne extérieure formant la piste annulaire 22c, dans laquelle sont formées des ouvertures 22d de géométrie oblongue similaire qui sont alignées chacune suivant un rayon de ladite roue codeuse, en étant espacées deux à deux d'un pas angulaire de l'ordre de 7,2°, mesuré entre les axes de symétrie respectifs desdites ouvertures. En particulier, deux ouvertures 22d adjacentes sont séparées deux à deux par un pont de matière 22e qui présente une dimension angulaire sensiblement identique à celle desdites ouvertures, soit d'environ 3,7°, chaque ouverture 22d présentant en outre une longueur de l'ordre de 10 mm, notamment étant égale à 7 mm.

Pour alléger la roue codeuse 22, des ouvertures oblongues 22f sont formées entre la couronne centrale 22a et la piste annulaire extérieure 22c. En relation avec la figure 5, ces ouvertures d'allégement 22f sont formées suivant un cercle qui s'étend entre les orifices 22b de fixation au moyeu 14 et les ouvertures 22d de la piste annulaire de codage 22c.

Le système comprend en outre un capteur 25 qui est apte à détecter le signal délivré par la roue codeuse 22 pour fournir l'information de rotation requise, notamment pour le pilotage du moteur d'assistance électrique équipant le vélo.

Pour ce faire, le système comprend un module capteur 26 qui comprend un boîtier 27 dans lequel le capteur 25 est logé et l'élément de cadre 9, 9' sur lequel ledit boîtier est fixé.

En particulier, le boîtier 27 permet de protéger le capteur 25 de tout polluant extérieur pouvant potentiellement dégrader ledit capteur et/ou interférer avec ses capacités de lecture du signal émis par la roue codeuse 22.

En particulier, le boîtier 27 est fixé sur la section centrale 10c, 10c' de l'élément de cadre 9, 9', notamment à proximité du logement 11, 11' de montage de l'axe de rotation de la roue motrice.

Le module capteur 26 comprend également une entretoise 28 qui est interposée entre le boîtier 27 et l'élément de cadre 9, 9', ladite entretoise étant agencée pour positionner le capteur 25 à une distance d de lecture du signal délivré par la roue codeuse 22 qui est déterminée pour limiter l'influence sur ledit signal de la présence du disque de frein 13 dans le module codeur 21.

Ainsi, en fonction de l'épaisseur de l'entretoise 28, il est possible de régler facilement la distance d de lecture entre le capteur 25 et la roue codeuse 22, afin notamment de limiter toute interférence dues à la présence des branches 13c du disque de frein 13 en regard des ouvertures 22d de la piste de codage 22c. Par ailleurs, il est également ainsi possible de régler la distance minimale et/ou maximale de détection du capteur 25.

En outre, l'intégration de l'élément de cadre 9, 9' dans le module capteur 26 permet de prendre en compte l'écartement E existant entre le disque de frein 13 et ledit élément de cadre dans le choix de l'épaisseur de l'entretoise 28, de sorte à obtenir un système de détermination particulièrement modulable en fonction de la géométrie du vélo devant être équipé.

Pour obtenir une lecture optimale par le capteur 25 des signaux délivrés par la roue codeuse 22, la distance D entre ledit capteur et le disque de frein 13 est préférentiellement supérieure à 5 mm, et la distance d entre ledit capteur et la roue codeuse 22 est inférieure à 4 mm, notamment en étant de l'ordre de 3,2 mm.

En relation notamment avec la figure 1d, le boîtier 27 comprend un logement dans lequel est disposé un socle 29 sur lequel le capteur 25 est fixé, notamment au moyen d'un surmoulage 40 assurant l'étanchéité. En particulier, le capteur 25 est relié à un dispositif de traitement du signal via des fils électriques qui sont maintenus dans le socle 29, en étant isolés de l'environnement extérieur par une gaine 30 qui fait saillie hors du boîtier 27 via un orifice formé à cet effet dans ledit boîtier et/ou ledit socle.

Le boitier 27 comprend une paroi arrière 27a qui est disposée en regard de l'élément de cadre 9, 9', ladite paroi arrière présentant une épaisseur e1 formant au moins en partie l'entretoise 28.

Dans le mode de réalisation représenté, le module capteur 26 comprend en outre un support 31, notamment réalisé en matériau plastique, sur lequel le boîtier 27 est disposé, ledit support présentant lui-même une épaisseur e2 qui forme au moins en partie l'entretoise 28, notamment en combinaison avec l'épaisseur e1 de la paroi arrière 27a susmentionnée.

En variante, notamment en fonction de l'écartement E entre le disque 13 et l'élément de cadre 9, 9', le boîtier 27 peut être monté directement sur l'élément de cadre 9, 9', afin de former l'entretoise 28 uniquement avec la paroi arrière 27a dudit boîtier. De façon avantageuse, notamment en relation avec la standardisation du boîtier 27, ledit boîtier est monté via un support 31 d'épaisseur e2 variable suivant ledit écartement, afin d'obtenir une entretoise 28 d'épaisseur totale e1, e2.

Le support 31 et le boîtier 27 présentent des moyens géométriques 32, 33 de positionnement dans une configuration empilée sur l'élément de cadre 9, 9'. Comme représenté sur la figure 1d, ces moyens se présentent sous la forme d'au moins un picot 32 formé en saillie sur la paroi arrière 27a du boîtier 27, et venant s'engager dans un logement complémentaire 33 formé sur une paroi avant du support 31.

De même, le support 31 peut présenter des picots 34 arrière qui sont agencés pour s'engager dans des logements complémentaires 35 formés à cet effet dans l'élément de cadre 9'.

Dans les modes de réalisation représentés, le support 31 comprend en outre des moyens de fixation sur l'élément de cadre 9, 9', lesdits moyens permettant la fixation du boîtier 27 sur ledit cadre au travers dudit support.

Pour ce faire, le boîtier 27 et le support 31 comprennent chacun deux œillets 27b, 31a pourvus chacun d'un orifice qui est agencé pour être aligné avec un orifice 36 formé à cet effet dans l'élément de cadre 9, 9', les orifices 36 dudit élément de cadre étant taraudés pour permettre une fixation conjointe dudit boîtier et dudit support empilés au moyen de deux vis 37.

Par ailleurs, sur les figures 2a, 2b, 3a et 3b, l'élément de cadre 9' présente une empreinte en creux 38 de réception de l'entretoise 28, dans laquelle sont formés les logements 35 et les orifices 36 décrits précédemment.

## Revendications

1. Système de détermination d'une information de rotation d'une roue de vélo équipée d'un dispositif de freinage comprenant un disque de frein (13) fixé à un moyeu (14) de ladite roue et un étrier de frein fixé à un élément de cadre (9, 9'), ledit système comprenant :
- un module codeur (21) comprenant le moyeu (14), le disque de frein (13) et un roue codeuse (22) qui est associée audit moyeu et/ou audit disque de frein, ladite roue codeuse délivrant un signal représentatif de sa rotation ;
- un capteur (25) apte à détecter le signal délivré par la roue codeuse (22) pour fournir l'information de rotation ;
ledit système étant **caractérisé en ce qu'**il comprend un module capteur (26) comprenant un boîtier (27) dans lequel le capteur (25) est logé, l'élément de cadre (9, 9') sur lequel le boîtier (27) est fixé et une entretoise (28) qui est interposée entre ledit boîtier et ledit élément de cadre, ladite entretoise étant agencée pour positionner ledit capteur à une distance (d) de lecture du signal délivré par la roue codeuse (22) qui est déterminée pour limiter l'influence sur ledit signal de la présence du disque de frein (13) dans le module codeur (21).

2. Système de détermination selon la revendication 1, **caractérisé en ce que** le boîtier (27) comprend une paroi arrière (27a) disposée en regard de l'élément de cadre (9, 9'), ladite paroi arrière présentant une épaisseur (e1) formant au moins en partie l'entretoise (28).

3. Système de détermination selon l'une des revendications 1 ou 2, **caractérisé en ce que** le module capteur (21) comprend un support (31) sur lequel le boîtier (27) est disposé, ledit support présentant une épaisseur (e2) formant au moins en partie l'entretoise (28).

4. Système de détermination selon la revendication 3, **caractérisé en ce que** le support (31) et le boîtier (27) présentent des moyens géométriques de positionnement dans une configuration empilée sur l'élément de cadre (9, 9').

5. Système de détermination selon l'une des revendications 3 ou 4, **caractérisé en ce que** le support (31) comprend des moyens (31a) permettant la fixation du boitier (27) sur l'élément de cadre (9, 9') au travers dudit support.

6. Système de détermination selon l'une quelconque des revendications 1 à 5, **caractérisé en ce que** l'élément de cadre (9, 9') présente une empreinte en creux (38) de réception de l'entretoise (28).

7. Système de détermination selon l'une quelconque des revendications 1 à 6, **caractérisé en ce que** la distance (D) entre le capteur (25) et le disque de frein (13) est supérieure à 5 mm, la distance (d) entre ledit capteur et la roue codeuse (22) étant inférieure à 4 mm.

8. Système de détermination selon l'une quelconque des revendications 1 à 7, **caractérisé en ce que** la roue codeuse (22) comprend une piste annulaire (22c) présentant une succession angulaire d'ouvertures (22d) et de ponts (22e) délivrant un signal pseudo-sinusoïdal de rotation.

9. Système de détermination selon l'une quelconque des revendications 1 à 8, **caractérisé en ce que** la roue codeuse (22) et le disque de frein (13) sont fixés conjointement sur le moyeu (14).

10. Système de détermination selon l'une quelconque des revendications 1 à 9, **caractérisé en ce que** l'élément de cadre (9, 9') présente deux sections d'extrémité (10a, 10b, 10a', 10b') agencées pour l'intégration dudit élément dans le cadre (1), et une section centrale (10c, 10c') sur laquelle le boîtier (27) est fixé.

11. Système de détermination selon la revendication 10, **caractérisé en ce qu'**une section d'extrémité (10b) présente des moyens (12) d'association en rotation sur un tube (6a) du cadre (1).

12. Système de détermination selon l'une des revendication 10 ou 11, **caractérisé en ce qu'**une section d'extrémité (10a, 10a', 10b') présente des moyens de fixation, notamment par soudage, sur un tube (6a, 6b) du cadre (1).

13. Système de détermination selon l'une quelconque des revendications 1 à 12, **caractérisé en ce que** le module codeur (21) comprend en outre une rondelle (23) qui est interposée entre le disque (13) et la roue codeuse (22).

14. Système de détermination selon la revendication 13, **caractérisé en ce que** la roue codeuse (22), la rondelle (23) et le disque de frein (13) sont fixés conjointement sur le moyeu (14).

15. Vélo comprenant un cadre (1) et une roue équipée d'un dispositif de freinage comprenant un disque de frein (13) fixé à un moyeu (14) de ladite roue et un étrier de frein fixé à un élément de cadre (9, 9') dudit vélo, ledit vélo étant équipé d'un système de détermination d'une information de rotation de ladite roue selon l'une quelconque des revendications 1 à 14.
